Europäisches Patentamt

European Patent Office

Office européen des brevets

(19)

(11) Publication number: **0 156 179 B1**

# EUROPEAN PATENT SPECIFICATION

(45) Date of publication of patent specification: **03.07.91**    (51) Int. Cl.⁵: **G06F 12/08**, G06F 11/14

(21) Application number: **85102207.9**

(22) Date of filing: **28.02.85**

(54) Method for protecting volatile primary store in a staged storage system.

(30) Priority: **27.03.84 US 593747**

(43) Date of publication of application:
**02.10.85 Bulletin 85/40**

(45) Publication of the grant of the patent:
**03.07.91 Bulletin 91/27**

(84) Designated Contracting States:
**DE FR GB IT**

(56) References cited:
**US-A- 4 084 231**

**IBM TECHNICAL DISCLOSURE BULLETIN, vol. 18, no. 1, June 1975, pages 61-62, New York, US; C.E. HOFF et al.: "Selective journaling"**

**IBM TECHNICAL DISCLOSURE BULLETIN, vol. 20, no. 5, October 1977, pages 1955-1958, New York, US; N.K. OUCHI et al.: "Check point copy for a two-stage store"**

(73) Proprietor: **International Business Machines Corporation**
**Old Orchard Road**
**Armonk, N.Y. 10504(US)**

(72) Inventor: **Canon, Michael Dennis**
**4951 Cherry Avenue 39**
**San Jose, CA 95118(US)**
Inventor: **Easton, Malcolm Coleman**
**5680 Judith Street**
**San Jose, CA 95123(US)**
Inventor: **Howard, John Hayes**
**5555 Hampton Street**
**Pittsburgh, PA 15206(US)**

(74) Representative: **Ahlman, Bertel**
**IBM Svenska AB Intellectual Property Department**
**S-163 92 Stockholm(SE)**

## Description

This invention relates to methods for protecting the contents of a volatile primary store in a staged storage system.

Page and other fixed block replacement methods have been used to control the movement of pages and to effect the dynamic association between the logical address space and the physical address space of a DASD storage hierarchy. The performance of directory-managed buffered stages, termed caches, is characterized by hit/miss ratios. A "hit" means that a READ reference to the cache generated by a requesting CPU-executable process locates the data item it desires in the high-speed cache, rather than in a lower speed DASD or other writeable backing store. A "hit" with respect to a WRITE reference is made when the CPU-executable process through the cache manager finds a counterpart location in a partially full buffer to overwrite. In this regard, a "miss" is registered if the data is unavailable in cache with respect to a READ reference, or, if an item must be destaged from the cache in order to make space available for a WRITE reference.

If data must be destaged or staged up between the small high-speed cache and the larger, but slower backing store, staging algorithms are required. Algorithms such as least recently used (LRU) or most recently used (MRU) maintain in the cache inventory those items which, more likely than not, will be referenced by a CPU-executable process in the future. A cache not containing a referenced item and which is otherwise full must remove one of its data elements so that it can be replaced by the requested item. Thus, a system tries to replace the least recently referenced item under the assumption that items which have not been referenced for a long time will not likely be referenced in the future.

A staged storage system can be thought of as including a primary store containing a portion of the page set contained entirely within the larger but slower secondary store of the system. Here, the primary store always contains the entries currently being referenced by the associated CPU system. If the primary store is operated as a "write-in cache", then changes to pages/records in the primary store are not written immediately to the secondary store.

A problem arises if a failure occurs in the primary store. This means that updates to the pages/records will be unavailable for posting to the secondary store. In this sense, the prior art is exemplified by Hoff, "Selective Journaling", IBM Technical Disclosure Bulletin, Vol. 18, pp. 61-62, June 1975; and Baird and Ouchi, "Synchronous Pair Block Recording", IBM Technical Disclosure Bulletin, Vol. 25, pp. 2053-2056.

Baird's staged storage protection method produces an endless history file such as that required for auditing. He uses both an active file and a history file in which the history file is updated in parallel with writing to the active file. Disadvantageously, Baird will delay updating until such overwriting is safe. Likewise, Hoff describes nulling of a journal entry after data has been destaged in a staged storage system.

It is an object of this invention to devise a method for protecting the primary store contents in a staged storage system. Such a system typically includes at least one processor accessing an LRU volatile primary store. Further, in such systems data changes are written only to the primary store. Thereafter, the changes are posted to the secondary store only upon destaging.

It is a related object, that such protection method be invoked continuously and utilize finite rather than endless journal lengths.

The present invention is defined in the attached claims.

The objects are achieved by the method steps of (a) writing a copy of each primary store update into a nonvolatile buffer (NVB); (b) periodically copying the buffer contents onto a circular journal recorded on a nonvolatile medium; and (c) rewriting selected entries from one portion of the journal to another, permitting thereby a cyclic reuse of the journal storage space, or posting records to a secondary store if the journal storage space is exhausted.

In the method of this invention, the finite storage space of the journal includes k equal-sized partitions. For illustrative purposes k = 3 is used throughout. Also, data recorded in the primary store is formatted into records and pages such that each record has a status field designating either no change thereto or an assignment to an addressable journal partition. Further, each page includes status fields. The page status field contains a reference bit for the page. The record status field contains a journal address field for each record. The addresses are used for controlling the selection of entries for rewriting from one portion of the journal to another.

In the method of this invention, the guaranty is made that every change is recorded either in the buffered journal or on the secondary store. Managing the finite buffered journal requires freeing journal space in large blocks, and updating status fields in the primary store to facilitate operation. The method maintains the journal extent finite, requires no checkpoints, and reduces the load on the CPU I/O system by reducing the number of required secondary storage writes when using a cache as the primary store.

The nonvolatile buffer (NVB) has a capacity much less than the primary store/cache capacity. Characteristically, changes posted in the primary store/cache are simultaneously written into the NVB. Relatedly, whenever the NVB becomes filled, its contents are written to the journal. Since the NVB is many times larger than any data item, the number of writes to the journal is sharply reduced by buffering. This in effect batches posting to the journal.

The inventive method controls the flow of data to the journal. The method assures that the most recent copy of each changed item in the primary store/cache always appears either in the journal or the NVB. As previously mentioned, this is accomplished by partitioning the finite journal and posting the changed items in the primary store/cache to the current journal. Each update written to primary store/cache also includes the status field showing which partition is currently in use. The journals are circularly ordered 1,2,3,1,2,3,... If a record has been changed in the primary store/cache, then the journal address in the cache record's status field indicates which of the journals contains the current record, the journals being written in the aforementioned circular order.

Briefly, during the time that, for example, journal 3 is being written, a scan is made of all journal addresses of the records in the primary store/cache. Since journal 1 is the next consecutive journal to be written into after journal 3 and it is desired to manage a finite journal, then all cache records having journal address 1 (stale records) are recopied into journal 3. Journal 1 will then be free/available. In the event that there is not sufficient space in journal 3, then the stale records would be written to the secondary store.

## Brief Description of the Drawing

Figure 1 depicts a shared access staged storage system with a shared access cache as the primary store to be found in the prior art.

Figure 2 sets out the primary and secondary store staging and READ/WRITE relationships.

Figure 3 exhibits the READ/WRITE relationships of staged storage together with the nonvolatile buffer and finite journal of this invention.

Figures 4 and 5 show the flow of control of a process implementing this invention each time a record in primary store/cache is referenced.

Figures 6-9 set out a PASCAL source code sequence which executes the flow of control of Figures 4-5.

For purposes of illustration, the invention is described in the context of a shared access DASD cache managed by way of PASCAL processor-based control units. However, the subsequent teachings could be applied without exercise of inventive faculty to protecting the contents of a CPU cache in a cache-main memory hierarchy or equivalents.

## The Shared Accessing Environment of a Staged Storage System

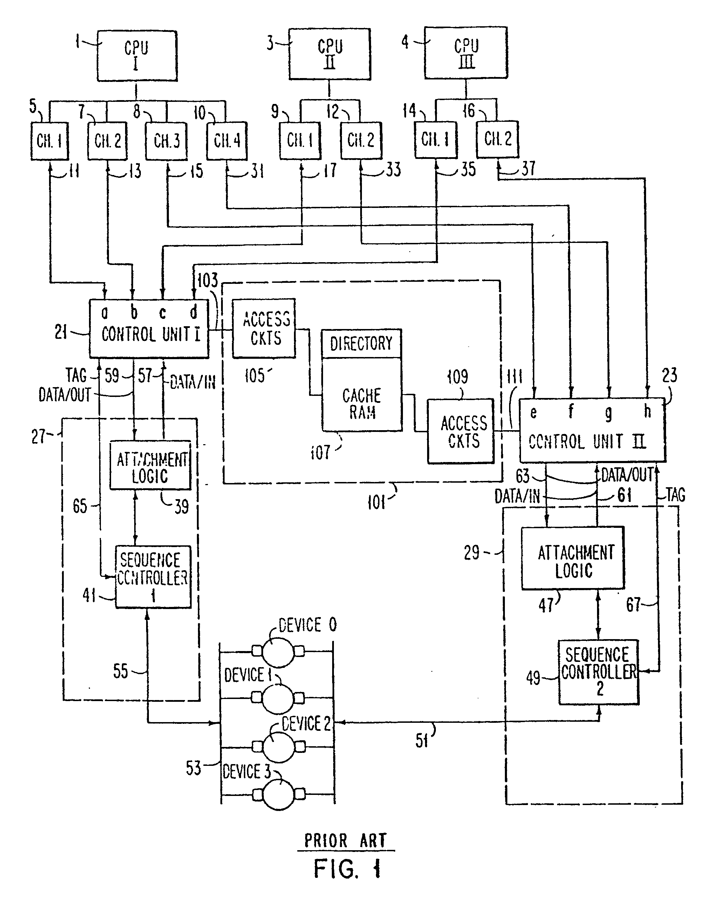

Referring now to Figure 1, there is shown a multi-CPU and shared DASD configuration within which the invention is embedded. Three CPU's, 1, 3, and 4, are suitably cross-connected to a pair of control units 21 and 23 over counterpart channels. In this regard, CPU 1 attaches four channels 5, 7, 8, and 10. CPU 3 attaches two channels 9 and 12, while CPU 4 attaches two channels 14 and 16.

Channels 1 and 2 terminate in control unit 21 ports A and B while channels 3 and 4 terminate in control unit 23 ports E and F. Channel 1 terminates in control unit 21 port C with channel 2 attaching control unit 23 at port G. Lastly, channel 1 drives port D of control unit 21 with channel 2 driving port H of control unit 23. The control units 21 and 23 share access to DASD devices 53 over counterpart paths including adaptor 27 in line 55 for controller 21 and adaptor 29 in line 51 for controller 23. Control units 21 and 23 attach adaptors 27 and 29 respectively over demand/response interfaces embracing tag and data lines. The interface between adaptor 27 includes tag line 65 and data/in and data/out paths 57 and 59. Likewise, tag line 67 and data/in and data/out paths 61 and 63 couple control unit 23 to adaptor 29.

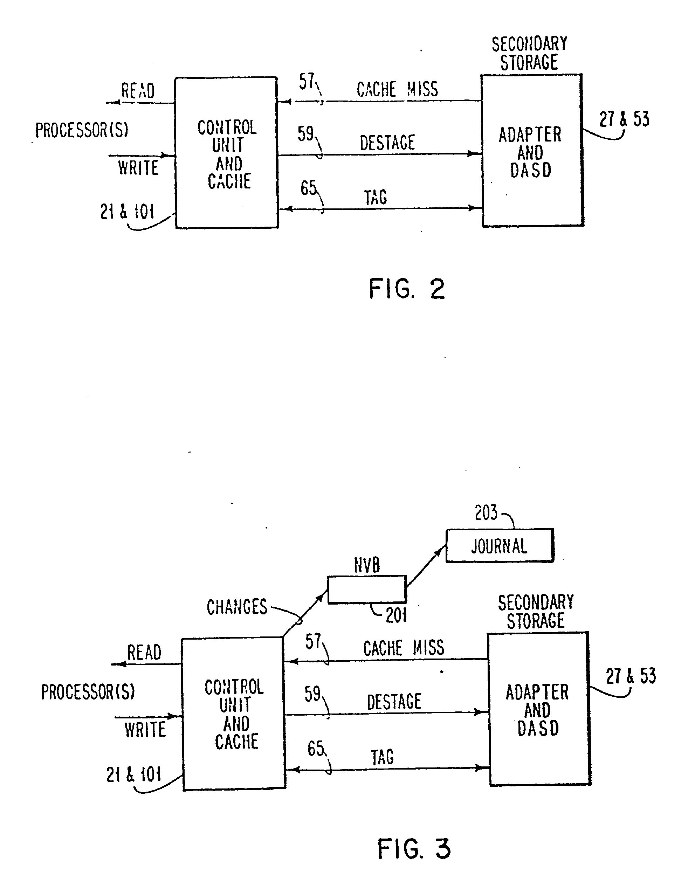

The demand/response-type interface is one in which the tag out identifies and validates the information on the data line out and vis-a-vis. In this regard, each CPU/control unit/device operates asynchronously with respect to one another in which directional control is asserted from the top down. Between control units 21 and 23, there is juxtaposed a cache 101. This cache is accessed either through controller 21 over path 103 and access circuit 105 or through control unit 23 over path 111 through access circuit 109. The cache proper may consist of a RAM in a suitable high-speed main memory technology such as CMOS. Configuration of a DASD cache suitable for the practice of this invention may be found in the IBM 3880 Storage Control Unit Model 13 described in IBM publication GA32-0062-0. Model 13 is designed as a high-performance cache DASD subsystem for use with IBM System 370 and especially MVS/SP Release 3 operating systems. The IBM 3880 Model 13 has two control units depicted in Figure 3 and a cache of between 4-8 megabyte capacity.

The set 53 of DASD includes devices 0-3. Each device is accessible through a device attachment unit over separate paths. Adaptor 27 provides a path through control unit 21 to any of the devices over line 55. Line 55 electrically terminates in a dispatchable arm containing a READ/WRITE head per device. Similarly, adaptor 29 provides an independent access path between control unit 23 over line 51 to another dispatchable arm per device. Each adaptor contains its respective logic (39,47) and sequence controller (41,49).

A CPU's relationship to DASD begins when the CPU invokes the START I/O instruction. This instruction serves to establish a connection between the CPU, an addressable device, and the execution of a channel program with the device. The invocation of the START I/O instruction causes control to be relinquished to a series of channel commands. The series or chain of channel commands (CCW's) is, in turn, sent over the channel to the control unit for selecting and accessing the device and effectuating any data movement across the interfaces. Each channel program consists of a sequential list of operations resident in the CPU main memory. The transmission to and the execution at the control unit of the CCW's takes place only after an initial connection between the CPU and the control unit has taken place. For each operation (CCW) in the channel program, one or more counterpart operations are required either at the control unit or device level over an active connection.

The first connection is that of an initial selection sequence. This selection is invoked with a START I/O operation in which an initial path is set up both electrically and logically in terms of device address (virtual/real) and device status (available/busy). The next active connection relates to that of CCW transfer and execution. A control CCW such as a SEEK requires physical positioning or activity at the device. The control unit in response to receipt of a control CCW can execute the CCW in disconnected mode. This means that the control unit disconnects from the channel while executing the indicated operations. The control unit does not require anymore channel activity until it reconnects to the channel. In a typical IBM 370 system as described for example in Clark et al, USP 3,725,864, Beausoleil, USP 3,336,582, and Boehner et al, USP 3,564,502, after a control unit has received a SEEK CCW and the parameters (target address), it disconnects for 30 milliseconds or more. Thirty milliseconds is the average time it takes to dispatch an accessing arm of a DASD in order to arrive at the tracks of a cylinder of interest. During this "dead time", both the channel and control unit are free to establish other connections. In contrast to disconnected modes, CCW's involving the movement or transfer of data between the channel and the device such as READ or WRITE CCW's require the control unit to remain connected to the channel in order to effectuate data transfer.

Each CCW must be obtained from the list in the CPU main memory and transferred over the channel to the control unit. At the control unit the CCW is executed. Subsequent to execution, there occurs an ending sequence. If the CCW is of the control type requiring device positioning, the control unit disconnects from the channel and must also reconnect when the control or device positioning has been completed. It is then followed by an ending sequence.

Active connection between elements for executing operations is necessary for extended periods only in respect to the movement of data. Either control unit 21 or 23 responsive to a READ CCW accesses the cache directory to ascertain if the data is resident. If there is a "hit", movement is between the RAM cache and the channel through the control unit. In the case of a WRITE CCW, movement is from the channel to the cache through the control unit. If the cache is of the "write-in" type and there is a "hit" (space available or a record to be updated), then data is written therein and subsequently copied to the DASD. If the cache is of the "write-through" type, then data is written independently into the cache and the DASD.

It is to be appreciated that a cache provides a large random access memory that holds copies of some of the records of the disk. If cache 101 is operated as a "write-in", then the random access memory 107 also may hold records that have been sent to the disk from the attached processors and that have not yet been written upon them. A directory describes the contents for disk cache using block allocation. The directory is also stored in RAM 101.

Primary/Secondary Store Relations and Attachments

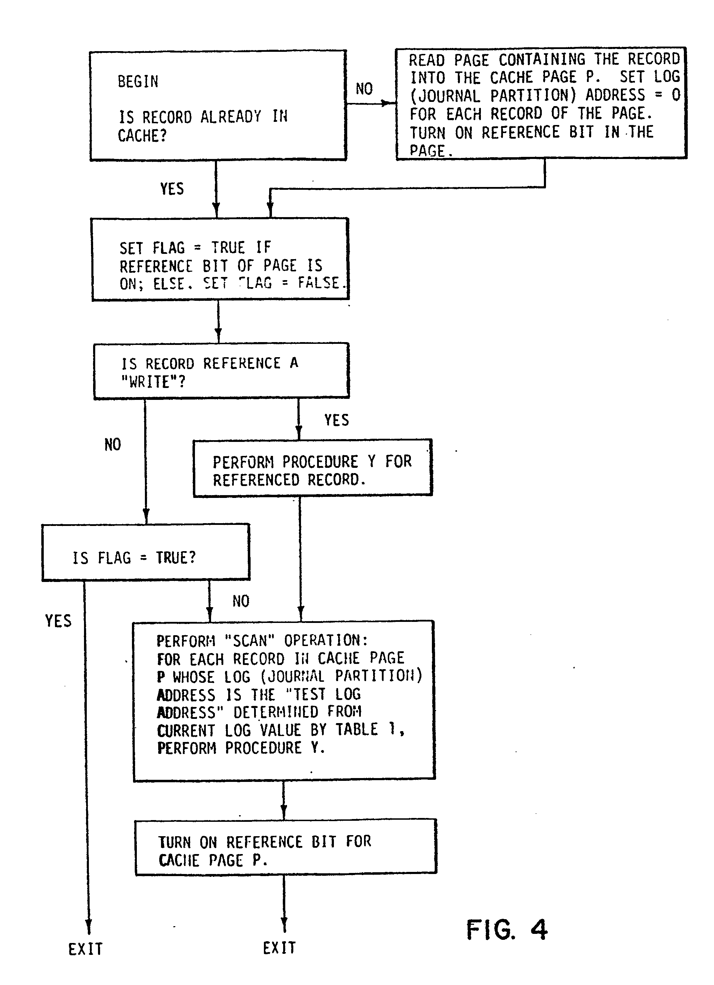

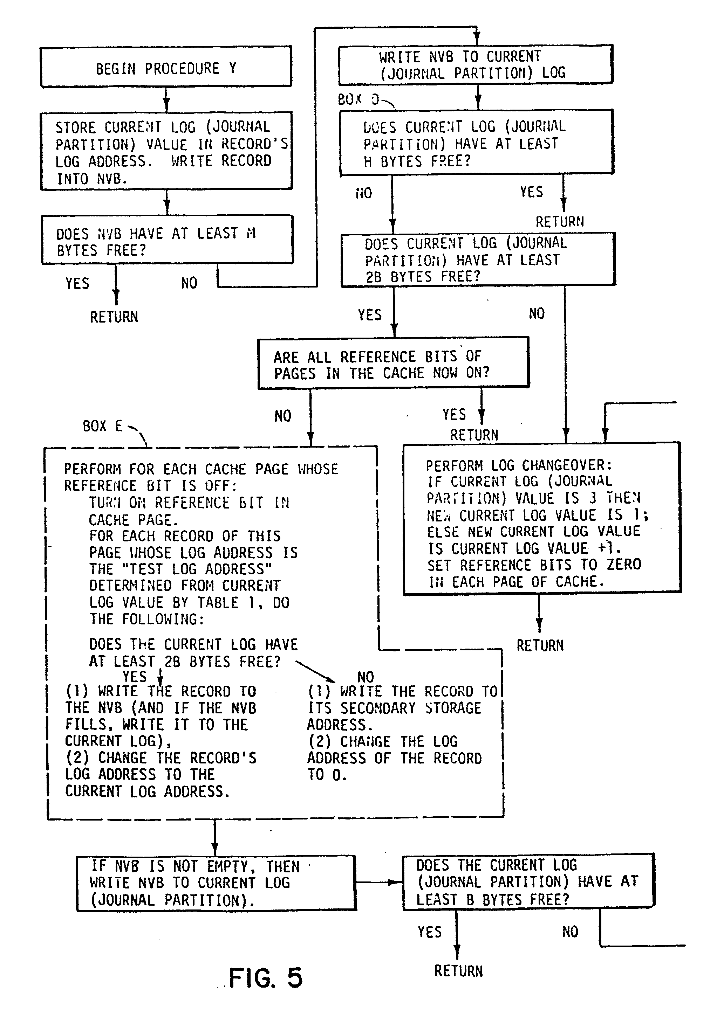

Referring now to Figure 2, there is shown a unitary control unit 21 and cache 101 coupled to a unitary adaptor 27 and DASD 53 across a typical demand/response interface. Indeed, all devices attaching the control unit 21 or 23 must conform to a standard electrical and message passing protocol. Typical protocols for DASD's attaching an IBM-type storage control unit are to be found in Bowers et al, USP 4,223,390, issued September 16, 1980, and the references cited at column 7, lines 52-60 therein. Additional details may be found in Bass et al, USP 4,262,332, issued April 14, 1981. Since the demand/response protocol and addressing of attached devices is not per se the subject of this invention, a detailed device level description is not included herein. Rather, the ensuing description is from the perspective of the control unit executing flow of control in Figures 4 and 5 and the PASCAL fragments responsive to each READ/WRITE CCW received from the CPU's.

Referring now to Figure 3, there is shown the addition of a nonvolatile buffer 201 and journal 203. Preferably attached at a typical device port of the IBM 3880 Model 13, the nonvolatile buffer 201 is preferably in the form of an addressable RAM in CMOS memory with a battery backup while the journal may be either an IBM 3380 DASD or a tape file such as the IBM 3420. An example of such a nonvolatile buffer memory system in CMOS may be found in Lancaster, "CMOS Cookbook", published by Howard W. Sams, Inc., Indianapolis, Indiana, in 1977.

The Method

Cache management operates on units of data called pages. Within each page are subunits of data termed records. When a record not in the cache is referenced by the attached CPU's, then all or part of the page containing that record is read into the cache from secondary storage. Each record format includes a status field containing two bits. If the record stored in the cache matches the record stored in the secondary storage system, then the bits remain set to zero. If a record has been changed in the cache and this change has not yet been made in the secondary storage, then the bits indicate which of three external journal partitions or logs the changes were last written to, or were intended to be written to, if the NVB containing them has not yet posted its contents to the journal.

The journal partitions (logs) are written in circular order 1,2,3,1,2,3... etc. During the time that journal partition (log) 3 is being written, it is necessary to check the journal partition (log) addresses of all records in the cache. If the cache contains records whose status bits indicate that the updates have been posted to journal (log) 1, then these entries must be relogged. "Relogging" means that records are recopied to journal partition (log) 3. Now, when the time comes to use journal partition (log) 1 again, all of the cache entries therein can be written over. Ideally, any relogging (rejournaling) required should fit into journal partition (log) 3. All journal extent (log) addresses as previously described are checked prior to the time when the amount of free space left in the journal extent (log) decreases to a predetermined threshold. In the preferred embodiment, provision is made to guaranty that all data that must be rejournaled (relogged) will at that time fit in the current journal extent (log). For other embodiments, in the event that it does not fit, a provision such as posting to secondary storage can be instituted.

In a journal having three or more sufficiently large partitions, the destaging of data by the normal operation of the cache reduces the amount of data that must be rejournaled (relogged) to a very small amount.

Each page of records stored within the cache has its status represented by a reference bit. The reference bits are used to control the scanning of records for stale records. All page reference bits are "turned off" (set to zero) whenever a changeover to a new journal partition (log) occurs. When a new page is brought into the cache, its reference bit is turned on. Whenever a record in the cache is referenced and its page reference bit is off, the bit is turned on and the records contained in the page are scanned to see if any need to be rejournaled (relogged). Thus, a record is scanned only if it was in the cache at the last journal partition (log) changeover and if its page is referenced for the first time since that changeover. This spreads the scanning out over time. That is, many pages are either newly brought into or leave the cache without being referenced again after the changeover. Thus, the set of scanned pages is significantly smaller than the entire set of pages in the cache.

The question of determining whether every page of the cache is eventually scanned by the above technique is now discussed.

In many cache management methods, there exists a maximum lifetime an unreferenced page can reside in the cache. In the case of LRU cache management, a page in a cache of n pages will be destaged or written over if n cache misses occur following a reference to that page. In another cache management technique termed "clock management", each page has its status represented by a "use bit" that is turned on whenever the page is referenced. When a page must be selected for replacement, a cursor moves through the "use bits" in a fixed sequence. The cursor turns off any "use bit" tested that is on and stops when a use bit that is already off is found. The page associated with that use bit is replaced. A page in a cache of n pages in the clock scheme will be destaged or written over if 2n use bit tests occur in the cache system following a reference to that page. Consequently, there exists a sufficient condition that is readily ascertainable in order to determine if every page that must be scanned has in fact been scanned. In general, the page reference bits can be directly checked to find if any are off.

There exists the possibility that scanning is not completed before the available journal partition (free log space) falls to a specified threshold H. If this occurs, then the pages not yet scanned since the journal partition (log) was started are then scanned. In this embodiment, the journal extent (log) size and H are chosen such that the scanning is completed by this time with high expectation. Moreover, the journal extent (log) is sufficiently large such that if rejournaling (relogging) is required, then all rejournal (relogged) data can be written to the current journal partition (log). If, however, the journal partition (log) size is small such that it cannot hold all of the data that must be rejournaled (relogged), then those records which cannot be written to the journal partition (log) are written to secondary storage.

In the event of primary store failure, recovery can be accomplished in the following manner. It must be first ascertained from data in the journal partitions and in the NVB which of the records is the most recent entry and which of the records is the oldest entry. This is facilitated by having stored with each record, a time stamp or sequence number. Also, the secondary storage address has been recorded with each record field in the journal partitions and in the NVB. The journal partitions and then the NVB may be processed from oldest to newest entry and each entry may then be written to its secondary file address. It should be observed that the faulty primary store need not be repaired. The only necessary condition is that the recovery subsystem be able to read the journal and the NVB and write to the secondary file. In the event of failure of the recovery subsystem during the restoration process, the procedure can be repeated at yet another time.

The Method Flow of Control

Referring now to Figures 4 and 5, there is shown the flow of control of the method implementing this invention each time a record in primary store/cache is referenced by either a CPU READ or WRITE CCW.

The steps shown in Figure 1 are to ascertain whether a record is present in the cache, its record and page status, whether it is a read or write, and initiate the cache scanning operation. Figure 5 treats the concurrent copying of updates to the cache and NVB, determining the subset of cache records journaled in the next successive partition and resident in cache which must be relogged in the current journal, ascertaining whether the currently written journal has sufficient space to record the reloggable set from the next journal partition, and writing either to the current journal or posting to the secondary storage.

In the further discussion, let P be the page that contains the referenced record. Note that the record's journal partition log address and time stamp are written to the NVB along with the record for use in case of system failure. Further, let M be the maximum record size, N the size of the cache in bytes, B the size of the NVB in bytes, and H the threshold on the amount of journal partition free space that determines when to complete scanning the cache for stale records. In this embodiment, the relationship among H, B, and N is

$$H = 4B + N + 1.$$

If L be the size of each journal partition in bytes, then in the preferred embodiment

$$L > N + H.$$

The following relations must also hold:

$$L > H + B,$$
$$H > 3B,$$
$$B > M, \text{ and}$$
$$N > B.$$

Referring now to Figure 4, if the record is already in the cache and the CPU makes thereto a write reference, then a branch is made to perform procedure Y, the subject matter of Figure 5. A write reference of a record already in cache means that the update must be posted into the NVB. First, since the maximum record size is of M bytes, does the NVB have at least M bytes available for write-over. If it does, then the procedure Y is complete and processing continues in Figure 4. If the amount of space available in NVB is less than M, then a writing of the current NVB contents to an appropriate freed-up journal partition and other subsequent processing is invoked.

If LF is the number of free bytes in the current journal partition, then initially LF = L > H + B. Before the first test as to whether the current journal partition (log) has at least H bytes free, it follows that there can be at most only B bytes written to the current journal from the NVB. So that with respect to the first reference, the current journal partition should have at least H bytes free. Now, at the time of the next write reference, the number of bytes available in the current journal partition L may be decreased by at most B bytes again. At the point in time When the current journal partition has less than H bytes available, then LF > H - B > 2B. This ensures that the functions designated in "box E" are executable if all reference bits of the cache are not on by this time. Box E will not be entered again until a journal partition changeover has occurred because the reference bits are all turned "on" following box E.

If the current journal partition does not have at least H bytes free, then in the preferred embodiment LF > 3B + N. This means that the current log must have at least 2B bytes free since at most N bytes of data must be logged. Thus, with the constraint of H > 4B + N, the reloggable data will always fit into the current log. The reason that L > N + His preferred is so that most or all of the pages in the cache will be referenced before the available number of bytes in the current journal partition falls below H bytes. As a further consequence, upon exit from procedure Y there are always at least M free bytes in the NVB and B free bytes in the journal.

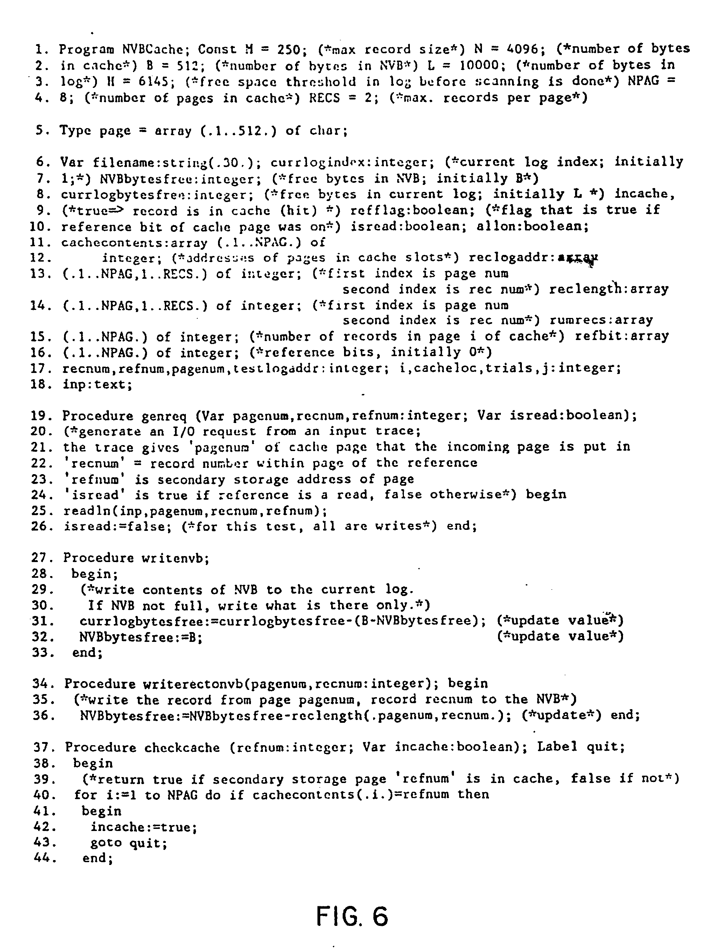

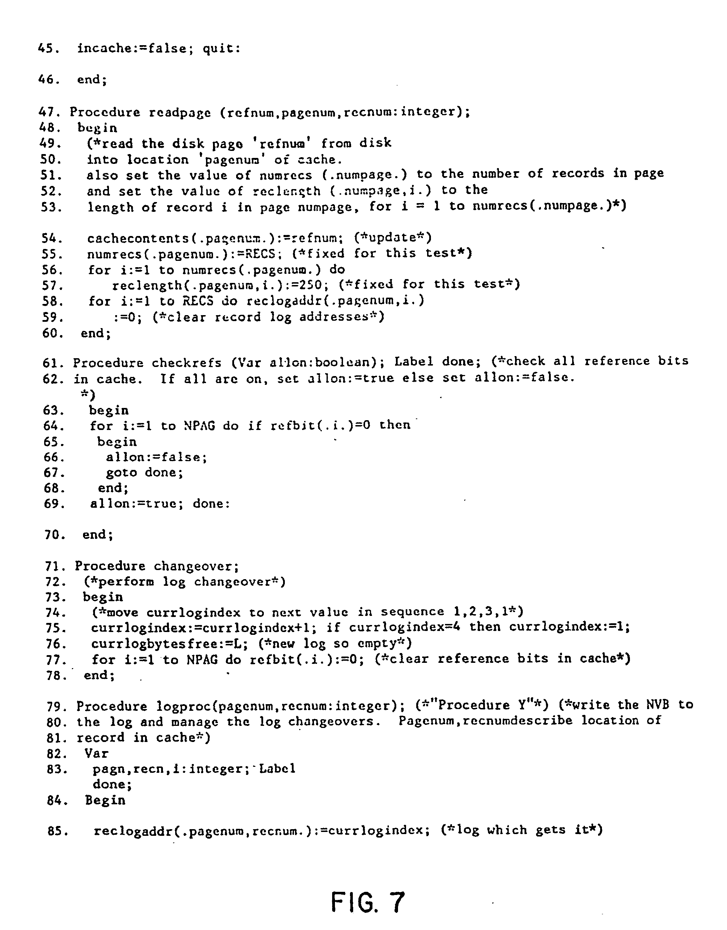

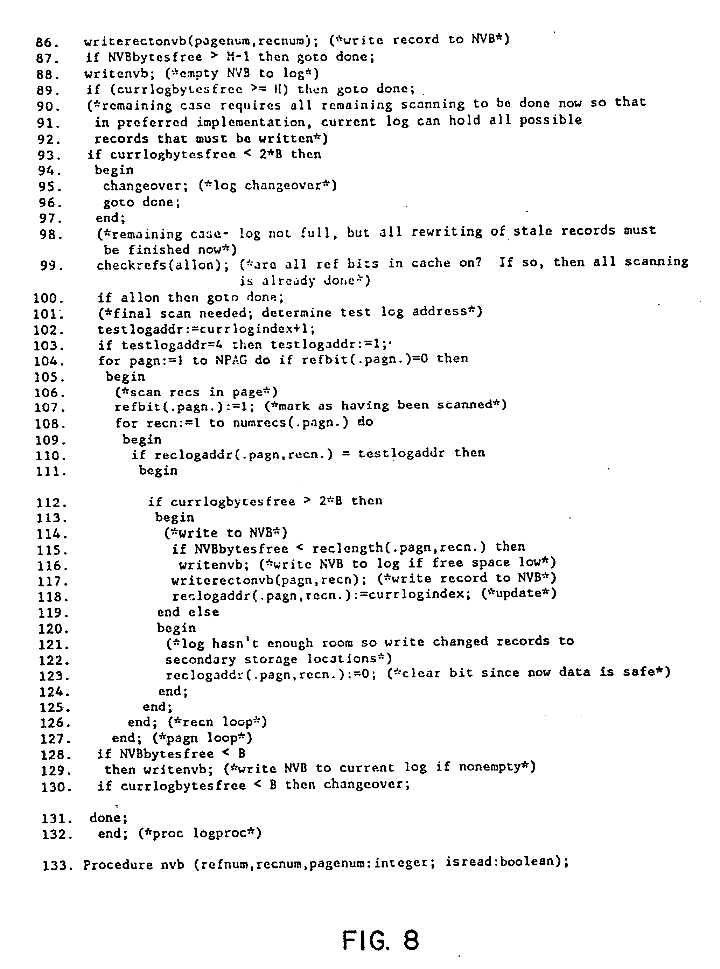

Referring now to Figures 6-9, there is set out a PASCAL implementation of the process exhibited in Figures 4 and 5. In this regard, PASCAL is a preferred form of writing system control codes because the flow of control is readily apparent and thus simplifies maintainability. Also, the language lends to top-down structured programming.

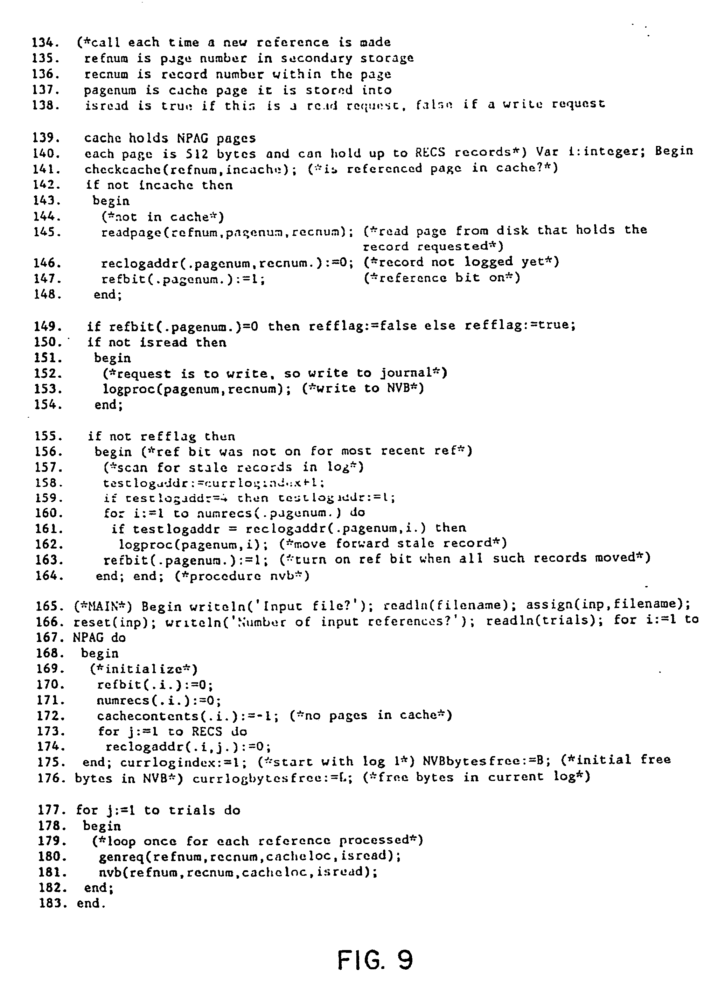

The functional modules are termed "procedures". The scheduled invocation (sequencing) of the procedures is set out in the mainline program in Figure 9 between lines 165-183. By its nature, PASCAL is a heavily typed language with means that all constants, variables, and data structures must be defined and precede the procedures and main program which utilize them. For this invention, the constants bounding the system such as record size N number of bytes in cache B, etc., are set out in lines 1-4. On line 5 there is defined a variable page which is a bounded array of 512 characters. Lines 6-18 are the various indices and status terms called pages, records, and their location, i.e. cache, NVB, journals or logs.

Each of the procedures is heavily commented as to its functional significance. The correspondence between the flow of control of the procedures and mainline program set out in Figures 6-9 and that set out in Figures 4 and 5 is readily apparent to the skilled artisan.

The technical advance represented by the above-described invention resides in the use of a nonvolatile buffer together with a nonvolatile journal to protect the volatile primary storage system against loss of changed data. In this invention, a circular journal is always made to contain, by rewriting of old entries, a copy of every changed item that resides in the primary store/cache. Scanning of an entry in the cache for the need to rejournal the entry is done at the time the entry is referenced. This procedure spreads the scanning over time and reduces the amount of scanning required. Appropriate use of a reference bit per page of a primary store/write-in cache substantially reduces the number of scans required to check for records that must be rejournaled prior to reuse of a part of a journal.

## Claims

1. A method for protecting a volatile primary store in a staged storage system wherein at least one processor accesses the primary store (21,101), and further wherein data changes are written only to the primary store, and thereafter said changes being posted to a secondary store (27,53) only upon destaging,characterized by:

   (a) writing of a copy of each changed record of data into a nonvolatile buffer (201) concurrent with the changed record being written in the primary store;

   (b) periodically copying the changed records written into the buffer onto a predetermined portion of a circular journal (203) stored on a nonvolatile medium; and

   (c) selecting records, comprising predetermined status information, from one portion of the journal and, either rewriting said selected records to another portion thereby permitting cyclic reuse of journal storage space, or posting said records to the secondary store when space in the journal is exhausted.

2. A method according to claim 1, wherein the finite storage space of the journal is partitioned into k consecutively addressable equal-sized extents, data being formatted into pages and records, each record having a status field indicative of whether the record has had either no change thereto or an assignment to a journal partition, each page having a status field indicative of whether there may exist stale records within the page.

3. A method according to claim 2, wherein the page status field being used to control the selecting of records with reference to changed records still residing in the primary store.

4. A method according to claim 1, wherein data are formatted into records and pages, comprising the steps of:

   responsive to each processor access of the primary store for altering a record, writing a copy of the changed record including a status field and time stamp into the nonvolatile buffer concurrent with the updating of the accessed record in the primary store, each changed record and its copy having its status field set to the same value;

   copying the changed records with status fields and time stamps from the buffer onto the circular journal, the journal having finite storage space and being partitioned into k consecutively addressable equal-sized extents, the record status field being indicative as to which of the k journal partitions the record belongs, and the time stamp showing the order in which the entries were written; and

during the interval within which changed records are being written into the buffer for eventual copying onto journal partition i, selecting records in the primary store whose status fields indicate their association with the next journal partition in sequence following i, and writing said selected records into the buffer.

5. A method according to claim 4, wherein during the interval within which changed records are being written to the journal and upon the buffer being filled, destaging additional records to the secondary store which would otherwise be destined to be written into the journal.

6. A method according to claim 5, wherein if L is the number of bytes in each journal partition, N is the number of bytes in the primary store, B is the number of bytes in the buffer, M is the maximum record size in bytes, and H is the threshold in bytes of the amount of journal partition determinative when to complete scanning of the primary store for selecting stale records, then

(a)
$H = 4B + N + 1,$
(b)
$L > N + H,$
(c)
$L > H + B,$
$H > 3B,$
$B > M,$ and
$N > B.$

7. A method according to claim 4, wherein each page includes a status field indicative of whether there may exist stale changed records within the page and further wherein the page status field is used to control the scanning and selection of prospectively stale records from the cache into the buffer.

## Revendications

1. Méthode de protection d'une mémoire primaire volatile dans un système de mémoire à étages, dans laquelle au moins un processeur accède à la mémoire primaire (21,101) et en outre dans laquelle les changements de données sont écrits seulement dans la mémoire primaire, ces changements étant ensuite envoyés à une mémoire secondaire (27,53) seulement lors du transfert descendant, caractérisée par :

(a) l'écriture d'une copie de chaque article de données modifié dans un tampon non volatil (201) simultanément à l'écriture de l'article modifié dans la mémoire primaire ;

(b) la copie périodique des articles modifiés, écrits dans le tampon, sur une partie prédéterminée d'un journal circulaire (203) enregistré sur un support non volatil ; et

(c) la sélection d'articles, comprenant une information d'état prédéterminée, à partir d'une partie du journal, et la réécriture des articles choisis dans une autre partie, ce qui permet une réutilisation cyclique de l'espace de stockage du journal, ou l'envoi desdits articles à la mémoire secondaire lorsque l'espace dans le journal est épuisé.

2. Méthode suivant la revendication 1, dans laquelle l'espace de stockage fini du journal est subdivisé en k étendues égales consécutivement adressables, les données étant structurées en pages et articles, chaque article ayant un champ d'état indicatif de ce que l'article n'a pas subi de modification ou d'une affectation à une subdivision de journal, chaque page ayant un champ d'état indicatif de ce qu'il peut exister des articles périmés dans la page.

3. Méthode suivant la revendication 2, dans laquelle le champ d'état de page est utilisé pour commander la sélection d'articles avec référence aux articles modifiés résidant encore dans la mémoire primaire.

4. Méthode suivant la revendication 1, dans laquelle les données sont structurées en articles et pages, comprenant les opérations de :

en réponse à chaque accès de processeur à la mémoire primaire pour modifier un article, écriture d'une copie de l'article modifié comprenant un champ d'état et un timbre de date dans le tampon non volatil simultanément à la mise à jour de l'article accédé dans la mémoire primaire, chaque article modifié et sa copie ayant leur champ d'état mis à la même valeur ;

copie des articles modifiés avec les champs d'état et les timbres de date à partir du tampon, sur le journal circulaire, le journal ayant un espace de stockage fini et étant subdivisé en k étendues égales consécutivement adressables, le champ d'état d'article étant indicatif de celle des k subdivisions de journal à laquelle l'article appartient, et le timbre de date indiquant l'ordre dans lequel les entrées ont été écrites ; et

pendant l'intervalle dans lequel les articles modifiés sont écrits dans le tampon pour copie éventuelle sur une subdivision de journal i, sélection des articles dans la mémoire primaire dont les champs d'état indiquent leur association avec la subdivision de journal suivante en séquence après i, et écriture desdits articles sélectionnés dans le tampon.

5. Méthode suivant la revendication 4, dans laquelle, pendant l'intervalle dans lequel les articles modifiés sont écrits dans le journal et lorsque le tampon est plein, on transfère à la mémoire secondaire les articles supplémentaires qui auraient normalement dûs être écrits dans le journal.

6. Méthode suivant la revendication 5, dans laquelle, si L est le nombre d'octets dans chaque subdivision de journal, N est le nombre d'octets dans la mémoire primaire, B est le nombre d'octets dans le tampon, M est la dimension maximale d'article en octets et H est le seuil en octets de la quantité de subdivision de journal qui détermine la fin de la scrutation de la mémoire primaire pour la sélection d'articles périmés, alors

(a)
$H = 4B + N + 1$
(b)
$L > N + H$,
(c)
$L > H + B$
$H > 3B$,
$B > M$, et
$N > B$.

7. Méthode suivant la revendication 4, dans laquelle chaque page comprend un champ d'état indicatif de ce qu'il peut ou non exister des articles modifiés périmés dans la page, et dans laquelle en outre le champ d'état de page est utilisé pour commander la scrutation et la sélection d'articles périmés à venir, de l'anté-mémoire vers le tampon.

**Ansprüche**

1. Verfahren zum Schützen eines flüchtigen primären Speichers in einem Stufenspeicherungs-System, bei welchem zumindest ein Prozessor auf den primären Speicher (21, 101) zugreift und bei welchem ferner Datenänderungen nur in den primären Speicher geschrieben werden und danach die Änderungen nur nach einem Ausspeichern an einen sekundären Speicher (27, 53) abgesendet werden, gekennzeichnet durch:

(a) Schreiben einer Kopie jedes geänderten Datensatzes in einen nichtflüchtigen Puffer (201) gleichlaufend damit, daß der geänderte Satz in den primären Speicher geschrieben wird,

(b) periodisches Kopieren der geänderten Sätze, die in den Puffer auf einen vorbestimmten Teil eines Kreisjournales (203) geschrieben wird, das auf einem nichtflüchtigen Medium gespeichert ist und

(c) Auswählen von Sätzen, die eine vorbestimmte Statusinformation von einem Teil des Journales aufweisen und entweder Neu-Schreiben der ausgewählten Sätze auf einen anderen Teil, wodurch es ermöglicht ist, einen Journalspeicherbereich zyklisch wieder zu verwenden oder Absenden der Sätze an den sekundären Speicher, wenn ein Bereich in dem Journal erschöpft ist.

2. Verfahren nach Anspruch 1, bei welchem der endliche Speicherbereich des Journals in k nacheinander adressierbare gleichgroße Bereiche aufgeteilt wird, wobei Daten in Seiten und Sätzen formatiert sind, jeder Satz ein Statusfeld aufweist, das anzeigt, ob der Satz entweder keine Änderung darüber hinaus oder eine Zuordnung einer Journalaufteilung gehabt hat, wobei jede Seite ein Statusfeld aufweist, das anzeigt, ob verbrauchte Sätze innerhalb der Seite vorhanden sein können.

3. Verfahren nach Anspruch 2, bei welchem das Seitenstatusfeld verwendet wird, um das Auswählen von Sätzen in Bezug auf geänderte, noch immer in dem primären Speicher liegende Sätze zu steuern.

4. Verfahren nach Anspruch 1, bei welchem Daten in Sätze und Seite formatiert werden, mit den folgenden Schritten:

Schreiben einer Kopie des geänderten Satzes mit einem Statusfeld und einem Zeitstempel in den nichtflüchtigen Puffer gleichlaufend mit dem Aktualisieren des Satzes, auf den zugegriffen wurde, in den primären Speicher entsprechend jedem Prozessorzugriff auf den primären Speicher zum Ändern eines Satzes, wobei das Statusfeld jedes geänderten Satzes und seiner Kopie auf denselben Wert gesetzt ist,

Kopieren der geänderten Sätze mit Statusfeldern und Zeitstempeln aus dem Puffer auf das Kreisjournal, wobei das Journal einen endlichen Speicherbereich aufweist und in k nacheinander adressierbare gleichgroße Bereiche aufgeteilt ist, das Satzstatusfeld anzeigt, welcher der k Journalaufteilungen der Satz gehört und der Zeitstempel die Reihenfolge zeigt, in welche die Eingaben geschrieben wurden und

Auswählen von Sätzen in dem primären Speicher, deren Statusfelder ihre Zuordnung der nächsten Journalaufteilung der Reihe nach i folgend anzeigen und Schreiben der ausgewählten Sätze in den Puffer während des Intervalles, innerhalb dessen geänderte Sätze in den Puffer zum schließlichen Kopieren auf eine Journalaufteilung i geschrieben werden.

5. Verfahren nach Anspruch 4, bei welchem während des Intervalles, innerhalb dessen geänderte Sätze in das Journal geschrieben werden und nachdem der Puffer aufgefüllt wird, zusätzliche Sätze an den sekundären Speicher ausgespeichert werden, die andernfalls zum Schreiben in das Journal bestimmt wären.

6. Verfahren nach Anspruch 5, bei welchem, wenn L die Anzahl von Bytes in jeder Journalaufteilung, N die Anzahl von Bytes in dem primären Speicher, B die Anzahl von Bytes in dem Puffer, M die maximale Satzgröße in Bytes und H die Schwelle in Bytes für das Ausmaß der Journalaufteilung, das beim Vollenden einer Abfrage des primären Speichers zum Auswählen verbrauchter Sätze bestimmend ist, bezeichnen, gilt;
   (a)
   $H = 4B + N + 1$,
   (b)
   $L > N + H$,
   (c)
   $L > H + B$,
   $H > 3B$,
   $B > M$ und
   $N > B$.

7. Verfahren nach Anspruch 4, bei welchem jede Seite ein Statusfeld aufweist, das anzeigt, ob verbrauchte geänderte Sätze innerhalb der Seite vorhanden sein können und bei welchem ferner das Seitenstatusfeld verwendet wird, um das Abfragen und Auswählen voraussichtlich verbrauchter Sätze von dem Cache-Speicher in den Puffer zu steuern.

PRIOR ART
FIG. 1

FIG. 2

FIG. 3

```
┌─────────────────────────┐          ┌──────────────────────────────┐
│                         │          │ READ PAGE CONTAINING THE RECORD│
│  BEGIN                  │   NO     │ INTO THE CACHE PAGE P.  SET LOG│
│                         │─────────▶│ (JOURNAL PARTITION) ADDRESS = 0│
│  IS RECORD ALREADY IN   │          │ FOR EACH RECORD OF THE PAGE.   │
│  CACHE?                 │          │ TURN ON REFERENCE BIT IN THE   │
│                         │          │ PAGE.                          │
└─────────────────────────┘          └──────────────────────────────┘
          │ YES
          ▼
┌─────────────────────────┐
│  SET FLAG = TRUE IF     │
│  REFERENCE BIT OF PAGE IS│
│  ON; ELSE. SET FLAG = FALSE.│
└─────────────────────────┘
          │
          ▼
┌─────────────────────────┐
│  IS RECORD REFERENCE A  │
│  "WRITE"?               │
└─────────────────────────┘
     │              │ YES
     │ NO           ▼
     │      ┌─────────────────────────┐
     │      │  PERFORM PROCEDURE Y FOR │
     │      │  REFERENCED RECORD.      │
     │      └─────────────────────────┘
     ▼
┌─────────────────────────┐
│  IS FLAG = TRUE?        │
└─────────────────────────┘
  │              │ NO
  │ YES          ▼
  │      ┌─────────────────────────────┐
  │      │ PERFORM "SCAN" OPERATION:   │
  │      │ FOR EACH RECORD IN CACHE PAGE│
  │      │ P WHOSE LOG (JOURNAL PARTITION)│
  │      │ ADDRESS IS THE "TEST LOG    │
  │      │ ADDRESS" DETERMINED FROM    │
  │      │ CURRENT LOG VALUE BY TABLE 1,│
  │      │ PERFORM PROCEDURE Y.        │
  │      └─────────────────────────────┘
  │              │
  │              ▼
  │      ┌─────────────────────────┐
  │      │ TURN ON REFERENCE BIT FOR│
  │      │ CACHE PAGE P.           │
  │      └─────────────────────────┘
  │              │
  ▼              ▼
 EXIT           EXIT
```

FIG. 4

```
┌─────────────────────────────┐        ┌─────────────────────────────┐
│    BEGIN PROCEDURE Y         │        │   WRITE NVB TO CURRENT       │
└─────────────────────────────┘        │   (JOURNAL PARTITION) LOG    │
              │                         └─────────────────────────────┘
              ▼                    BOX D ─┐         │
┌─────────────────────────────┐        ┌─────────────────────────────┐
│ STORE CURRENT LOG (JOURNAL   │        │ DOES CURRENT LOG (JOURNAL    │
│ PARTITION) VALUE IN RECORD'S │        │ PARTITION) HAVE AT LEAST     │
│ LOG ADDRESS.  WRITE RECORD   │        │ H BYTES FREE?                │
│ INTO NVB.                    │        └─────────────────────────────┘
└─────────────────────────────┘          NO            YES
              │                           │             │
              ▼                           │          RETURN
┌─────────────────────────────┐          ▼
│ DOES NVB HAVE AT LEAST M     │        ┌─────────────────────────────┐
│ BYTES FREE?                  │        │ DOES CURRENT LOG (JOURNAL    │
└─────────────────────────────┘        │ PARTITION) HAVE AT LEAST     │
   YES          NO                      │ 2B BYTES FREE?               │
    │                                   └─────────────────────────────┘
    ▼                                     YES            NO
 RETURN                                    │             │
                                           ▼
                            ┌─────────────────────────────┐
                            │ ARE ALL REFERENCE BITS OF    │
                            │ PAGES IN THE CACHE NOW ON?   │
                            └─────────────────────────────┘
                               NO              YES
                                │               │
                                │            RETURN
```

BOX E ─

PERFORM FOR EACH CACHE PAGE WHOSE
REFERENCE BIT IS OFF:
    TURN ON REFERENCE BIT IN
    CACHE PAGE.
    FOR EACH RECORD OF THIS
    PAGE WHOSE LOG ADDRESS IS
    THE "TEST LOG ADDRESS"
    DETERMINED FROM CURRENT
    LOG VALUE BY TABLE 1, DO
    THE FOLLOWING:

    DOES THE CURRENT LOG HAVE
    AT LEAST 2B BYTES FREE?
       YES ↓           NO

(1) WRITE THE RECORD TO   (1) WRITE THE RECORD TO
THE NVB (AND IF THE NVB    ITS SECONDARY STORAGE
FILLS, WRITE IT TO THE     ADDRESS.
CURRENT LOG),           (2) CHANGE THE LOG
(2) CHANGE THE RECORD'S    ADDRESS OF THE RECORD
LOG ADDRESS TO THE       TO 0.
CURRENT LOG ADDRESS.

PERFORM LOG CHANGEOVER:
IF CURRENT LOG (JOURNAL
PARTITION) VALUE IS 3 THEN
NEW CURRENT LOG VALUE IS 1;
ELSE NEW CURRENT LOG VALUE
IS CURRENT LOG VALUE +1.
SET REFERENCE BITS TO ZERO
IN EACH PAGE OF CACHE.

RETURN

```
┌─────────────────────────────┐    ┌─────────────────────────────┐
│ IF NVB IS NOT EMPTY, THEN    │───▶│ DOES THE CURRENT LOG         │
│ WRITE NVB TO CURRENT LOG     │    │ (JOURNAL PARTITION) HAVE AT  │
│ (JOURNAL PARTITION).         │    │ LEAST B BYTES FREE?          │
└─────────────────────────────┘    └─────────────────────────────┘
                                      YES            NO
                                       │
                                       ▼
                                    RETURN
```

## FIG. 5

```
Program NVBCache; Const M = 250; (*max record size*) N = 4096; (*number of bytes
in cache*) B = 512; (*number of bytes in NVB*) L = 10000; (*number of bytes in
log*) H = 6145; (*free space threshold in log before scanning is done*) NPAG =
8; (*number of pages in cache*) RECS = 2; (*max. records per page*)

Type page = array (.1..512.) of char;

Var filename:string(.30.); currlogindex:integer; (*current log index; initially
1;*) NVBbytesfree:integer; (*free bytes in NVB; initially B*)
currlogbytesfree:integer; (*free bytes in current log; initially L *) incache,
(*true=> record is in cache (hit) *) refflag:boolean; (*flag that is true if
reference bit of cache page was on*) isread:boolean; allon:boolean;
cachecontents:array (.1..NPAG.) of
       integer; (*addresses of pages in cache slots*) reclogaddr:array
(.1..NPAG,1..RECS.) of integer; (*first index is page num
                           second index is rec num*) reclength:array
(.1..NPAG,1..RECS.) of integer; (*first index is page num
                           second index is rec num*) numrecs:array
(.1..NPAG.) of integer; (*number of records in page i of cache*) refbit:array
(.1..NPAG.) of integer; (*reference bits, initially 0*)
recnum,refnum,pagenum,testlogaddr:integer; i,cacheloc,trials,j:integer;
inp:text;

Procedure genreq (Var pagenum,recnum,refnum:integer; Var isread:boolean);
(*generate an I/O request from an input trace;
the trace gives 'pagenum' of cache page that the incoming page is put in
'recnum' = record number within page of the reference
'refnum' is secondary storage address of page
'isread' is true if reference is a read, false otherwise*) begin
readln(inp,pagenum,recnum,refnum);
isread:=false; (*for this test, all are writes*) end;

Procedure writenvb;
 begin;
   (*write contents of NVB to the current log.
    If NVB not full, write what is there only.*)
   currlogbytesfree:=currlogbytesfree-(B-NVBbytesfree); (*update value*)
   NVBbytesfree:=B;                                      (*update value*)
 end;

Procedure writerectonvb(pagenum,recnum:integer); begin
  (*write the record from page pagenum, record recnum to the NVB*)
   NVBbytesfree:=NVBbytesfree-reclength(.pagenum,recnum.); (*update*) end;

Procedure checkcache (refnum:integer; Var incache:boolean); Label quit;
  begin
   (*return true if secondary storage page 'refnum' is in cache, false if not*)
   for i:=1 to NPAG do if cachecontents(.i.)=refnum then
   begin
     incache:=true;
     goto quit;
   end;
```

## FIG. 6

15

```
incache:=false; quit:

end;

Procedure readpage (refnum,pagenum,recnum:integer);
begin
  (*read the disk page 'refnum' from disk
  into location 'pagenum' of cache.
  also set the value of numrecs (.numpage.) to the number of records in page
  and set the value of reclength (.numpage,i.) to the
  length of record i in page numpage, for i = 1 to numrecs(.numpage.)*)

  cachecontents(.pagenum.):=refnum; (*update*)
  numrecs(.pagenum.):=RECS; (*fixed for this test*)
  for i:=1 to numrecs(.pagenum.) do
     reclength(.pagenum,i.):=250; (*fixed for this test*)
  for i:=1 to RECS do reclogaddr(.pagenum,i.)
     :=0; (*clear record log addresses*)
end;

Procedure checkrefs (Var allon:boolean); Label done; (*check all reference bits
in cache.  If all are on, set allon:=true else set allon:=false.
  *)
  begin
  for i:=1 to NPAG do if refbit(.i.)=0 then
    begin
     allon:=false;
     goto done;
    end;
   allon:=true; done:

end;

Procedure changeover;
(*perform log changeover*)
begin
  (*move currlogindex to next value in sequence 1,2,3,1*)
  currlogindex:=currlogindex+1; if currlogindex=4 then currlogindex:=1;
  currlogbytesfree:=L; (*new log so empty*)
  for i:=1 to NPAG do refbit(.i.):=0; (*clear reference bits in cache*)
end;

Procedure logproc(pagenum,recnum:integer); (*"Procedure Y"*) (*write the NVB to
the log and manage the log changeovers.  Pagenum,recnumdescribe location of
record in cache*)
Var
  pagn,recn,i:integer; Label
   done;
Begin

  reclogaddr(.pagenum,recnum.):=currlogindex; (*log which gets it*)
```

FIG. 7

```
writerectonvb(pagenum,recnum); (*write record to NVB*)
if NVBbytesfree > M-1 then goto done;
writenvb; (*empty NVB to log*)
if (currlogbytesfree >= M) then goto done;
(*remaining case requires all remaining scanning to be done now so that
 in preferred implementation, current log can hold all possible
 records that must be written*)
if currlogbytesfree < 2*B then
  begin
   changeover; (*log changeover*)
   goto done;
  end;
(*remaining case- log not full, but all rewriting of stale records must
  be finished now*)
checkrefs(allon); (*are all ref bits in cache on?  If so, then all scanning
                    is already done*)
if allon then goto done;
(*final scan needed; determine test log address*)
testlogaddr:=currlogindex+1;
if testlogaddr=4 then testlogaddr:=1;·
for pagn:=1 to NPAG do if refbit(.pagn.)=0 then
  begin
   (*scan recs in page*)
   refbit(.pagn.):=1; (*mark as having been scanned*)
   for recn:=1 to numrecs(.pagn.) do
     begin
       if reclogaddr(.pagn,recn.) = testlogaddr then
         begin

           if currlogbytesfree > 2*B then
             begin
               (*write to NVB*)
               if NVBbytesfree < reclength(.pagn,recn.) then
                 writenvb; (*write NVB to log if free space low*)
               writerectonvb(pagn,recn); (*write record to NVB*)
               reclogaddr(.pagn,recn.):=currlogindex; (*update*)
             end else
             begin
               (*log hasn't enough room so write changed records to
               secondary storage locations*)
               reclogaddr(.pagn,recn.):=0; (*clear bit since now data is safe*)
             end;
         end;
     end; (*recn loop*)
  end; (*pagn loop*)
if NVBbytesfree < B
  then writenvb; (*write NVB to current log if nonempty*)
if currlogbytesfree < B then changeover;

done;
  end; (*proc logproc*)

Procedure nvb (refnum,recnum,pagenum:integer; isread:boolean);
```

<div align="center">

# FIG. 8

</div>

```
(*call each time a new reference is made
refnum is page number in secondary storage
recnum is record number within the page
pagenum is cache page it is stored into
isread is true if this is a read request, false if a write request

cache holds NPAG pages
each page is 512 bytes and can hold up to RECS records*) Var i:integer; Begin
checkcache(refnum,incache); (*is referenced page in cache?*)
if not incache then
  begin
   (*not in cache*)
     readpage(refnum,pagenum,recnum); (*read page from disk that holds the
                                       record requested*)
     reclogaddr(.pagenum,recnum.):=0; (*record not logged yet*)
     refbit(.pagenum.):=1;          (*reference bit on*)
   end;

   if refbit(.pagenum.)=0 then refflag:=false else refflag:=true;
   if not isread then
     begin
      (*request is to write, so write to journal*)
        logproc(pagenum,recnum); (*write to NVB*)
     end;

   if not refflag then
     begin (*ref bit was not on for most recent ref*)
       (*scan for stale records in log*)
       testlogaddr:=currlogindex+1;
       if testlogaddr=4 then testlogaddr:=1;
       for i:=1 to numrecs(.pagenum.) do
        if testlogaddr = reclogaddr(.pagenum,i.) then
          logproc(pagenum,i); (*move forward stale record*)
        refbit(.pagenum.):=1; (*turn on ref bit when all such records moved*)
     end; end; (*procedure nvb*)

(*MAIN*) Begin writeln('Input file?'); readln(filename); assign(inp,filename);
reset(inp); writeln('Number of input references?'); readln(trials); for i:=1 to
NPAG do
  begin
   (*initialize*)
     refbit(.i.):=0;
     numrecs(.i.):=0;
     cachecontents(.i.):=-1; (*no pages in cache*)
     for j:=1 to RECS do
       reclogaddr(.i,j.):=0;
   end; currlogindex:=1; (*start with log 1*) NVBbytesfree:=B; (*initial free
bytes in NVB*) currlogbytesfree:=L; (*free bytes in current log*)

for j:=1 to trials do
  begin
   (*loop once for each reference processed*)
     genreq(refnum,recnum,cacheloc,isread);
     nvb(refnum,recnum,cacheloc,isread);
  end;
end.
```

## FIG. 9